# EUROPÄISCHE PATENTSCHRIFT

(11) **EP 0 759 376 B1**
(45) Veröffentlichungstag und Bekanntmachung des Hinweises auf die Patenterteilung: **05.06.2002**
(21) Anmeldenummer: 96112417.9
(22) Anmeldetag: 01.08.1996
(51) Int. Cl.: B60N 2/06, B60N 2/08

(54) **Führungsschieneneinrichtung für einen Fahrzeugsitz**
Rail guide device for a vehicle seat
Dispositif de rail de guidage pour un siège de véhicule

(30) Priorität: 17.08.1995 DE 19530265
(43) Veröffentlichungstag der Anmeldung: 26.02.1997
(73) Patentinhaber: GRAMMER AG, 92224 Amberg (DE)
(72) Erfinder: Meier, Johann, 92269 Fensterbach/Wolfring (DE); Hartl, Paul, 92245 Kümmersbruck (DE)
(74) Vertreter: LOUIS, PÖHLAU, LOHRENTZ & SEGETH

(56) Entgegenhaltungen:
- EP-A- 0 094 438
- EP-A- 0 195 508
- WO-A-95/17316
- DE-A- 2 411 414
- DE-A- 2 716 549
- FR-A- 2 175 254
- FR-A- 2 332 882
- GB-A- 2 253 999

## Beschreibung

Die Erfindung betrifft eine Führungsschieneneinrichtung für einen Fahrzeugsitz gemäß dem Oberbegriff des Anspruchs 1.

Eine solche Führungsschieneneinrichtung ist aus der DE 28 20 151 C2 bekannt. Bei dieser bekannten Führungsschieneneinrichtung ist es erforderlich, das Arretierelement der Arretiereinrichtung am zweiten Schienenteil und das Griffteil der Arretiereinrichtung an dem Arretierelement in voneinander getrennten Arbeitsschritten zu verbinden. Das bedingt einen entsprechenden Herstellungsaufwand. Außerdem kann die Verbindung zwischen dem Griffteil und dem Arretierelement der Arretiereinrichtung Wünsche offen lassen. Ein weiterer Mangel dieser bekannten Führungsschieneneinrichtung besteht darin, daß das Federelement, mit welchem der Arretierabschnitt des Arretierelementes mit der Zahnung des ersten Schienenteiles federnd in Eingriff gebracht wird, an der Außenseite der Führungsschieneneinrichtung angeordnet ist, so daß eine Beschädigung des Federelementes und eine Verletzungsgefahr durch das Federelement nicht ausgeschlossen werden kann. Außerdem weist dort das Federelement nur eine relativ kleine Länge auf, was zu einem entsprechend harten Federungsverhalten führt. Daraus resultiert ein entsprechender Kraftaufwand bei der Betätigung der Arretiereinrichtung, d.h. bei der Aufhebung der Arretierung zwischen dem ersten und dem zweiten Schienenteil, um diese gegeneinander in Längsrichtung der Führungsschieneneinrichtung wunschgemäß verstellen zu können.

Der Erfindung liegt die Aufgabe zugrunde, eine Führungsschieneneinrichtung der eingangs genannten Art zu schaffen, welche die oben erwähnten Mängel nicht aufweist, d.h. bei welcher der Zusammenbau ihrer Einzelteile vereinfacht und das Federungsverhalten der Arretiereinrichtung bei gleichzeitig gut geschützter Anordnung des Federelementes verbessert ist.

Diese Aufgabe wird bei einer Führungsschieneneinrichtung der eingangs genannten Art erfindungsgemäß durch die Merkmale des Kennzeichenteiles des Anspruchs 1 gelöst.

Dadurch, daß das Griffteil mit dem Arretierelement mittels des Nippels verbunden ist, ergibt sich der Vorteil einer vergleichsweise einfachen Montage des Griffteils und des Arretierelementes, d.h. der Arretiereinrichtung, am zweiten Schienenteil der Schienenführungseinrichtung. Außerdem wird diese Verbindung des Griffteils mit dem Arretierelement mittels dem Nippel, um welchen die Arretiereinrichtung zwischen ihrer normalen Ruhe- bzw. Arretierstellung und einer federbelasteten Freigabestellung verschwenkbar ist, auf einfache Weise sehr zuverlässig gestaltet. Dadurch, daß das Federelement seinen Befestigungsendabschnitt auf der von der Öffnung für den Arretierabschnitt des Arretierelementes abgewandten Seite der durch den Nippel festgelegten Schwenkachse aufweist, ergibt sich der Vorteil, daß der längliche Federabschnitt des Federelementes entsprechend lang gestaltbar ist, so daß auch mit einer relativ harten Feder, d.h. einer relativ großen Federkonstante des Federelementes, ein geeignetes weiches Federungsverhalten erzielbar ist. Das wirkt sich auf den Kraftaufwand zur Betätigung der Arretiereinrichtung zum Verstellen derselben von der normalen Arretierstellung in die Freigabestellung entsprechend vorteilhaft aus. Ein weiterer Vorteil der erfindungsgemäßen Führungsschieneneinrichtung besteht darin, daß das Federelement mit seinem länglichen Federabschnitt im Inneren des U-förmigen zweiten Randprofiles des zweiten Schienenteiles verläuft, so daß es in der Führungsschieneneinrichtung gut geschützt angeordnet ist.

Bei den Befestigungselementen kann es sich um vom Arretierelement, das aus einem Stahlblech gestaltet sein kann, wegstehende Laschen, Zapfen o.dgl. handeln. Ein derartiges Arretierelement ist z.B. in einem Stanz- und anschließendem Biegevorgang einfach herstellbar.

Eine erhebliche Erhöhung der Festigkeit der Führungsschieneneinrichtung in ihrer Längsrichtung ist erzielbar, wenn die Öffnung im zweiten Schenkelteil des zweiten Schienenteiles mit mindestens einem zur Zahnung entgegengesetzt orientierten Zapfenelement versehen ist und wenn die mindestens eine Aussparung im Arretierabschnitt des Arretierelementes im verriegelten Zustand mindestens ein Zapfenelement und einen entsprechenden Zahn der Zahnung aufnimmt. Bei einer solchen Ausbildung der Führungsschieneneinrichtung wird die Festigkeit der Arretierung in Längsrichtung der Führungsschieneneinrichtung nämlich nicht nur durch die Zahnung des zweiten Schienenteiles sondern außerdem auch durch die Öffnung im zweiten Schienenteil, durch die sich der Arretierabschnitt des Arretierelementes hindurcherstreckt, sowie durch das mindestens eine in der Öffnung ausgebildete Zapfenelement erzielt. Während die Zähne der Zahnung des zweiten Schienenteiles üblicherweise nach unten orientiert sind, ist das mindestens eine Zapfenelement der Öffnung im zweiten Schienenteil üblicherweise nach oben orientiert. Selbstverständlich wäre es auch möglich, das mindestens eine Zapfenelement wie die Zahnung nach unten zu orientieren.

Bei der erfindungsgemäßen Führungsschieneneinrichtung besteht das Federelement vorzugsweise aus einem Federdraht. Ein solcher Federdraht ist in einfacher Weise geeignet biegbar, um an der Führungsschieneneinrichtung montiert zu werden.

Besonders vorteilhaft ist es bei der erfindungsgemäßen Führungsschieneneinrichtung, wenn nicht nur auf einer Seite eine Zahnung vorgesehen ist, sondern wenn die beiden Abwinkelungen des ersten Schienenteiles jeweils mit einer Zahnung und wenn die beiden zweiten Schenkelteile des zweiten Schienenteiles jeweils mit einer Öffnung für das Arretierelement der Arretiereinrichtung ausgebildet sind, weil eine derartige Führungsschieneneinrichtung die Montage der Arretiereinrichtung sowohl auf ihrer einen als auch auf ihrer zweiten Seite ermöglicht. Das ist insbes. dann vorteilhaft, wenn erfindungsgemäße Führungsschieneneinrichtungen bei einem rechtsgelenkten bzw. bei einem linksgelenkten Fahrzeug zur Anwendung gelangen, bzw. wenn die Arretiereinrichtung bei einem entsprechenden Fahrzeugsitz mit der rechten oder mit der linken Hand betätigt werden soll.Bei einer Führungsschieneneinrichtung der zuletzt genannten Art ist es desweiteren vorteilhaft, wenn jedes der beiden Schenkelteile mit einer weiteren Öffnung für die Schwenkachse ausgebildet ist, d.h. wenn jedes der beiden zweiten Schenkelteile mit einer weiteren den Befestigungsabschnitt für das Federelement festlegenden Aussparung ausgebildet ist, das am einen Endabschnitt des zweiten Schienenelementes vorgesehen ist.

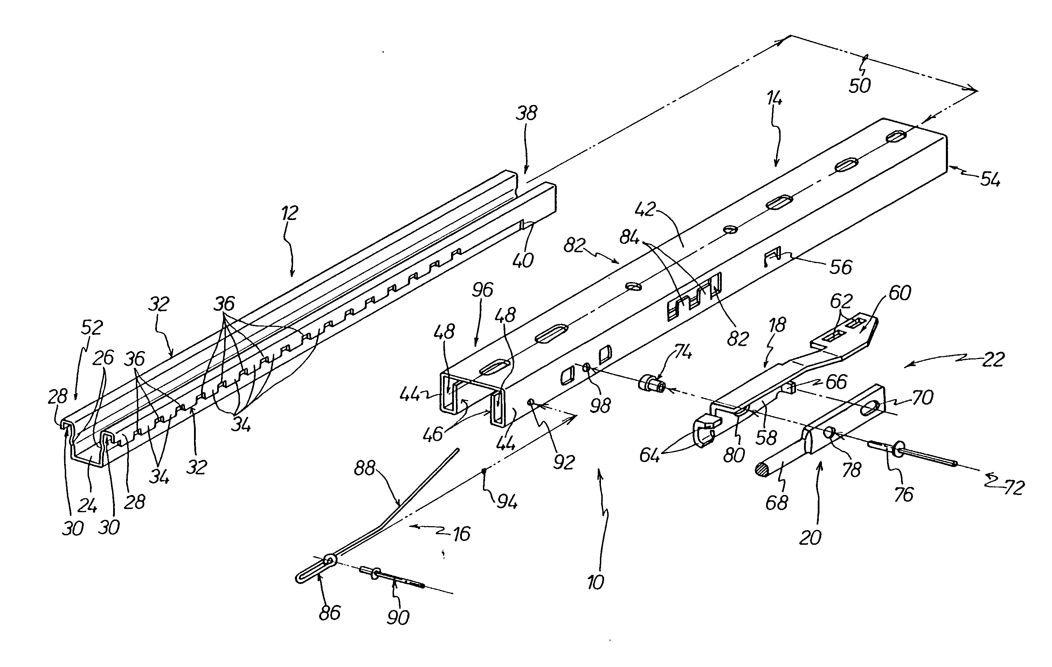

Ein Ausführungsbeispiel der erfindungsgemäßen Führungsschieneneinrichtung für einen Fahrzeugsitz ist in der Zeichnung räumlich in einer Explosionsdarstellung gezeichnet und wird nachfolgend beschrieben.

Die Figur zeigt perspektivisch und voneinander getrennt die Komponenten der Führungsschieneneinrichtung 10, nämlich ihr unteres erstes Schienenteil 12, ihr oberes zweites Schienenteil 14, ein Federelement 16 sowie ein Arretierelement 18 und abschnittweise ein Griffteil 20 einer Arretiereinrichtung 22 der Führungsschieneneinrichtung 10.

Das untere erste Schienenteil 12 weist ein Grundteil 24, zwei vom Grundteil nach oben stehende erste Schenkelteile 26 und von den ersten Schenkelteilen oberseitig nach außen orientierte Abwinkelungen 28 auf. Die Abwinkelungen 28 bilden mit dem zugehörigen ersten Schenkelteil 26 jeweils ein umgekehrt U-förmiges erstes Randprofil 30. Beide Abwinkelungen 28 sind jeweils mit einer Zahnung 32 mit äquidistant voneinander beabstandeten Zähnen 34 und Zahnlücken 36 ausgebildet.

Wenigstens eine Abwinkelung 28 ist an einem Endabschnitt 38 mit einem Anschlag 40 ausgebildet.

Das zweite Schienenteil 14 weist ein Oberteil 42 und zwei vom Oberteil 42 nach unten stehende zweite Schenkelteile 44 auf. Von den zweiten Schenkelteilen 44 stehen nach innen orientierte Abwinkelungen 46 weg, die mit dem jeweils zugehörigen zweiten Schenkelteil 44 jeweils ein zweites U-förmiges Randprofil 48 bilden. Das erste und das zweite Schienenteil 12 und 14 sind in ihrem Querschnittsprofil derartig dimensioniert, daß das erste Randprofil 30 des ersten Schienenteiles 12 und das zweite Randprofil 48 des zweiten Schienenteiles 14 im zusammengebauten Zustand der beiden Schienenteile 12 und 14 ineinandergreifen. Dieser Zusammenbau der beiden Schienenteile 12 und 14 ist durch die Pfeillinien 50 angedeutet. Beim Zusammenbau der beiden Schienenteile 12 und 14 wird so vorgegangen, daß das erste Schienenteil 12 mit seinem vom Anschlag 40 entfernten Endabschnitt 52 durch den Endabschnitt 54 in das zweite Schienenteil 14 eingeführt wird. Diese Einführbewegung wird dadurch begrenzt, daß der Anschlag 40 des ersten Schienenteiles 12 an einem am zweiten Schienenteil 14 vorgesehenen Gegenanschlag 56 zur Anlage kommt.

Das Arretierelement 18 der Arretiereinrichtung 22 weist einen abgewinkelten Korpus 58 auf, von welchem einerseits ein Arretierelement 60 mit zwei voneinander beabstandeten Aussparungen 62 und von welchem andererseits Befestigungselemente 64 und 66 wegstehen. Die Aussparungen 62 im Arretierelement 60 weisen voneinander einen Abstand auf, der dem Abstand zwischen benachbarten Zähnen 34 der beiden Zahnungen 32 entspricht. Das Befestigungselement 64 dient zur definierten Anlage an einem Griffabschnitt 68 des Griffteils 20 und das Befestigungselement 66 dient zur Festlegung in einem im Griffteil 20 ausgebildeten Loch 70. Mechanisch fest wird das Arretierelement 18 mit dem Griffteil 20 durch die Schwenkachse 72 verbunden, um welche die Arretiereinrichtung 22 an einem der beiden zweiten Schenkelteile 44 des zweiten Schienenteiles 14 zwischen der Ruhe- bzw. Arretierstellung und einer Freigabestellung verschwenkbar ist. Die Schenkachse 72 ist bspw. durch einen im Inneren des zweiten Schienenteiles 14 anzuordnenden Nippel 74 und einen mit dem Nippel 74 zu verbindenden bzw. verbundenen Splint 76 gebildet. Dabei erstreckt sich der Splint 76 durch eine Bohrung 78 im Griffteil 20 und durch eine Bohrung 80 im Arretierelement 18.

Die beiden seitlichen zweiten Schenkelteile 44 des zweiten Schienenteiles 14 sind gegenüberliegend jeweils mit einer Öffnung 82 ausgebildet, von welcher nur die eine Öffnung 82 in der Figur sichtbar ist. Jede der beiden sich gegenüberliegenden Öffnungen 82 ist mit zwei Zapfenelementen 84 ausgebildet, die voneinander einen Abstand besitzen, der dem Abstand zwischen benachbarten Zähnen 34 jeder der beiden Zahnungen 32 des ersten Schienenteiles 12 entspricht. Jede der beiden Öffnungen 82 mit den Zapfenelementen 84 ist derart dimensioniert, daß sich das Arretierelement 18 mit seinem Arretierabschnitt 60 im zusammengebauten Zustand der Führungsschieneneinrichtung 10 in die entsprechende Öffnung 82 hineinerstreckt, wobei die Öffnungen 62 im Arretierabschnitt 60 des Arretierelementes 18 in der Ruhe- bzw. Arretierstellung von den beiden Zapfenelementen 84 und von zwei Zähnen 34 der entsprechenden Zahnung 32 des ersten Schienenteiles 12 durchdrungen werden. Zumindest die jeweiligen zwei Zähne 34 durchdringen die beiden Öffnungen 62 im Arretierabschnitt 60 axial spielfrei, so daß sich eine axial spielfreie Arretierung zwischen erstem und zweitem Schienenteil 12, 14 ergibt. Die Arretierstellung der Arretiereinrichtung 22 wird hierbei mittels des Federelementes 16 bewirkt, das einen Befestigungsendabschnitt 86 sowie einen länglichen Federabschnitt 88 aufweist. Das Federelement 16 wird mit seinem Befestigungsendabschnitt 86 mittels eines Befestigungselementes 90 an einer Aussparung 92 fixiert.Das ist durch die strichpunktierten Pfeillinien 94 angedeutet. Jedes der beiden zweiten Schenkelteile 44 ist an dem vom Endabschnitt 54 abgewandten zweiten Endabschnitt 96 jeweils mit einer solchen Aussparung 92 ausgebildet.

Das Federelement 16 ist derart gestaltet, daß es im in die Führungsschieneneinrichtung 10 eingebauten Zustand an dem in die Öffnung 82 hineinstehenden Teil des Arretierabschnittes 60 anliegt und diesen nach oben, d.h. gegen die entsprechende, nach unten orientierten Zahnung 32 des ersten Schienenteiles 12 zwängt.

Um die Arretiereinrichtung 22 sowohl auf der einen als auch auf der anderen Seite der Führungsschieneneinrichtung 10 anbringen zu können, ist jedes der beiden zweiten Schenkelteile 44 des zweiten Schienenteils 14 mit einer weiteren Öffnung 98 für die Schwenkachse 72 der Arretiereinrichtung 22 ausgebildet. Die beiden Öffnungen 98 liegen sich axial gegenüber, in der Zeichnung ist nur eine dieser beiden Öffnungen 98 sichtbar.

## Patentansprüche

1. Führungsschieneneinrichtung für einen Fahrzeugsitz mit einem unteren ersten Schienenteil (12), das ein Grundteil (24), zwei vom Grundteil (24) nach oben stehende erste Schenkelteile (26) und von den ersten Schenkelteilen (26) nach außen orientierte Abwinkelungen (28) aufweist, die mit den ersten Schenkelteilen (26) umgekehrt U-förmige erste Randprofile (30) bilden, mit einem zweiten Schienenteil (14), das ein Oberteil (42), zwei vom Oberteil (42) nach unten stehende zweite Schenkelteile (44) und von den zweiten Schenkelteilen (44) nach innen orientierte Abwinkelungen (46) aufweist, die mit den zweiten Schenkelteilen (44) U-förmige zweite Randprofile (48) bilden, wobei die ersten und zweiten Randprofile (30, 48) ineinandergreifen, und mit einer Arretiereinrichtung (22), die ein Arretierelement (18) mit einem über Befestigungselemente (64, 66) verbundenen Griffteil (20) umfasst, wobei das Arretierelement (18) an einem der zweiten Schenkelteile (44) des zweiten Schienenteils (14) mittels einem eine Schwenkachse (72) bildenden Nippel (74) schwenkbeweglich angeordnet ist und mit einem mindestens eine Aussparung (62) aufweisenden Arretierabschnitt (60) in eine Öffnung (82) im entsprechenden zweiten Schenkelteil (44) hineinsteht und mit einer an der zugehörigen Abwinkelung (30) des ersten Schienenteiles (12) vorgesehenen Zahnung (32) mittels eines Federelementes (16) zum federnden Verrasten des die mindestens eine Aussparung (62) aufweisenden Arretierabschnittes (60) des Arretierelementes (18) mit der Zahnung (32) des ersten Schienenteiles (12) in Eingriff bringbar ist, wobei das Federelement (16) am zweiten Schienenteil (14) mit einem Befestigungsendabschnitt (86) festgelegt ist, und wobei sich vom Befestigungsendabschnitt (86) des Federelementes (16) ein länglicher Federabschnitt (88) bis zum Arretierabschnitt (60) erstreckt,
**dadurch gekennzeichnet, daß** der Griffteil (20) mit dem Arretierelement (18) zusätzlich mittels des Nippels (74) verbunden ist, daß der Befestigungsendabschnitt (86) des Feder elements (16) sich auf der von der Öffnung (82) für den Arretierabschnitt (60) des Arretierelementes (18) abgewandten Seite der Schwenkachse (72) befindet, und daß der längliche Federabschnitt (88) im Inneren des U-förmigen zweiten Randprofiles (48) des zweiten Schienenteiles (14) angeordnet ist.

2. Führungsschieneneinrichtung nach Anspruch 1,
**dadurch gekennzeichnet, daß** die Öffnung (82) im zweiten Schenkelteil (44) des zweiten Schienenteiles (14) mit mindestens einem zur Zahnung (32) entgegengesetzt orientierten Zapfenelement (84) versehen ist und daß die mindestens eine Aussparung (62) im Arretierabschnit (60) des Arretierelementes (18) im verriegelten Zustand mindestens ein Zapfenelement (84) und einen entsprechenden Zahn (34) der Zahnung (32) aufnimmt.

3. Führungsschieneneinrichtung nach Anspruch 1,
**dadurch gekennzeichnet ,**
**daß** das Federelement (16) aus Federdraht besteht.

4. Führungsschieneneinrichtung nach einem der Ansprüche 1 bis 3,
**dadurch gekennzeichnet,**
**daß** die beiden Abwinkelungen (28) des ersten Schienenteiles (12) jeweils mit einer Zahnung (32) und daß die beiden zweiten Schenkelteile (44) des zweiten Schienenteiles (14) jeweils mit einer Öffnung (82) für den Arretierabschnitt (60) des Arretierelementes (18) der Arretiereinrichtung (22) ausgebildet sind.

5. Führungsschieneneinrichtung nach Anspruch 4,
**dadurch gekennzeichnet,**
**daß** jedes der beiden zweiten Schenkelteile (44) mit einer weiteren Öffnung (98) für den Nippel (74) der Schwenkachse (72) ausgebildet ist.

6. Führungsschieneneinrichtung nach Anspruch 4,
**dadurch gekennzeichnet,**
**daß** jedes der beiden zweiten Schenkelteile (44) mit einer weiteren, den Befestigungsabschnitt (86) des Federelementes (16) festlegenden Aussparung (92) ausgebildet ist, das am einen Endabschnitt (96) des zweiten Schienenelementes (14) vorgesehen ist.

## Claims

1. Guide rail device for a vehicle seat, having a lower, first rail part (12) which has a base part (24), two first limb parts (26) protruding upwards from the base part (24) and angled portions (28) which are orientated outwards from the first limb parts (26) and form, together with the first limb parts (26), inverted U-shaped, first edge profiles (30), having a second rail part (14) which has an upper part (42), two second limb parts (44) which protrude downwards from the upper part (42) and angled portions (46) which are orientated inwards from the second limb parts (44) and form, together with the second limb parts (44), U-shaped, second edge profiles (48), the first and second edge profiles (30, 48) interlocking, and having a locking device (22) which comprises a locking element (18) having a gripping part (20) connected via fastening elements (64, 66), the locking element (18) being arranged pivotably on one of the second limb parts (44) of the second rail part (14) by means of a nipple (74) forming a pivot axis (72), and projecting with a locking section (60), which has at least one cutout (62), into an opening (82) in the corresponding, second limb part (44) and being able to be brought into engagement with a toothing (32), which is provided on the associated angled portion (30) of the first rail part (12), by means of a spring element (16) for resiliently latching the locking section (60), which has at least one cutout (62), of the locking element (18) to the toothing (32) of the first rail part (12), the spring element (16) being secured on the second rail part (14) by a fastening end section (86), and an elongated spring section (88) extending from the fastening end section (86) of the spring element (16) as far as the locking section (60), **characterized in that** the gripping part (20) is additionally connected to the locking element (18) by means of the nipple (74), **in that** the fastening end section (86) of the spring element (16) is situated on that side of the pivot axis (72) which faces away from the opening (82) for the locking section (60) of the locking element (18), and **in that** the elongated spring section (88) is arranged in the interior of the U-shaped, second edge profile (48) of the second rail part (14).

2. Guide rail device according to Claim 1, **characterized in that** the opening (82) in the second limb part (44) of the second rail part (14) is provided with at least one pin element (84) orientated in an opposite direction to the toothing (32), and **in that** in the locked-together state, the at least one cutout (62) in the locking section (60) of the locking element (18) accommodates at least one pin element (84) and a corresponding tooth (34) of the toothing (32).

3. Guide rail device according to Claim 1,
**characterized in that** the spring element (16) consists of spring wire.

4. Guide rail device according to one of Claims 1 to 3, **characterized in that** the two angled portions (28) of the first rail part (12) are each formed with a toothing (32), and **in that** the two second limb parts (44) of the second rail part (14) are each formed with an opening (82) for the locking section (60) of the locking element (18) of the locking device (22).

5. Guide rail device according to Claim 4, **characterized in that** each of the two second limb parts (44) is formed with a further opening (98) for the nipple (74) of the pivot axis (72).

6. Guide rail device according to Claim 4, **characterized in that** each of the two second limb parts (44) is formed with a further cutout (92) which secures the fastening section (86) of the spring element (16), which spring element is provided on the one end section (96) of the second rail element (14).

## Revendications

1. Dispositif de rail de guidage pour un siège de véhicule, du type comportant
un premier élément de rail inférieur (12) présentant une portion de base (24), deux premières ailes (26) partant vers le haut depuis la portion de base (24) et des portions angulaires (28) orientées vers l'extérieur depuis les premières ailes (26) et qui, avec chacune des premières ailes (26) forment un premier rebord (30) dont le profil est en forme de U renversé,
un second élément de rail (14) présentant une portion supérieure (42), deux secondes ailes (44) partant vers le bas depuis la portion supérieure (42) et des portions angulaires (46) orientées vers l'intérieur depuis les secondes ailes (44) et qui, avec chacune des secondes ailes (44) forment un second rebord (48) dont le profil est en forme de U, les premiers et seconds rebords (30, 48) s'accrochant l'un dans l'autre,
un dispositif d'arrêt (22) qui se compose d'un élément d'arrêt (18) réuni par des éléments de fixation (64, 66) à une pièce d'accrochage (20),
l'élément d'arrêt (18) étant monté basculant sur l'une des deux secondes ailes (44) du second élément de rail (14) au moyen d'une douille (74) constituant un axe de basculement (72),
une section d'arrêt (60), présentant au moins un évidement (62) pénétrant dans une ouverture (82) de la seconde aile correspondante (44),
une denture (32) prévue sur le rebord (30) correspondant du premier élément de rail (12), une section d'arrêt (60) de l'élément d'arrêt (18) pouvant venir en prise avec la denture (32) du premier élément de rail (12) grâce à un élément élastique (16) pour le repos élastique de la section d'arrêt (60) qui présente au moins un évidement (62),
l'élément élastique (16) étant immobilisé sur le second élément de rail (14) par une section terminale de fixation (86), et une section élastique longitudinale (88) s'étendant depuis la section terminale de fixation (86) de l'élément élastique (16) jusqu'à la section d'arrêt (60), **caractérisé en ce que** la pièce d'accrochage (20) est additionnellement réunie à l'élément d'arrêt (18) au moyen de la douille (74), **en ce que** la section terminale de fixation (86) de l'élément élastique (16) se trouve sur le côté opposé à l'ouverture (82) destinée à la section d'arrêt (60) de l'élément d'arrêt (18) de l'axe de basculement (72) et **en ce que** la section élastique longitudinale (88) est située à l'intérieur du second rebord en forme de U (48) du second élément de rail (14).

2. Dispositif de rail de guidage selon la revendication 1, **caractérisé en ce que** l'ouverture (82) pratiquée dans la seconde aile (44) du second élément de rail (14) porte au moins un élément formant cheville (84) orienté à l'opposé de la denture (32) et **en ce que** l'évidement ou les évidements (62) pratiqué(s) dans la section d'arrêt (60) de l'élément d'arrêt (18) reçoit, à l'état verrouillé, au moins un élément formant cheville (84) et une dent correspondante (34) de la denture (32).

3. Dispositif de rail de guidage selon la revendication 1, **caractérisé en ce que** l'élément élastique (16) se compose d'un fil métallique élastique.

4. Dispositif de rail de guidage selon l'une des revendications 1 à 3, **caractérisé en ce que** les deux portions angulaires (28) du premier élément de rail (12) comportent chacune une denture (32) et **en ce que** les deux secondes ailes (44) du second élément de rail (14) comportent chacune une ouverture (82) pour la section d'arrêt (60) de l'élément d'arrêt (18) du dispositif d'arrêt (22).

5. Dispositif de rail de guidage selon la revendication 4, **caractérisé en ce que** chacune des deux secondes ailes (44) comporte encore une autre ouverture (98) pour la douille (74) de l'axe de basculement (72).

6. Dispositif de rail de guidage selon la revendication 4, **caractérisé en ce que** chacune des deux secondes ailes (44) comporte encore un autre évidement (92) immobilisant la section de fixation (86) de l'élément élastique (16) et qui est prévu à une section terminale (96) du second élément de rail (14).
